# EUROPEAN PATENT APPLICATION

(11) **EP 1 800 743 A1**
(43) Date of publication of application: **27.06.2007**
(21) Application number: 05077976.8
(22) Date of filing: 23.12.2005
(51) Int. Cl.: B01J 19/10, B01J 19/00

(54) **Device for ultrasonically treating a fluid and/or sample**

(71) Applicant: Nederlandse Organisatie voor Toegepast-Natuurwetenschappelijk Onderzoek TNO, 2628 VK Delft (NL)
(72) Inventor: Breeuwer, René, 2623 HP Delft (NL); Hoegaerts, Christophe Louis Gabriel, 2521 ZJ Den Haag (NL); Stelwagen, Uilke, 2635 JG Den Hoorn (NL)
(74) Representative: Winckels, Johannes Hubertus F.

(57) **Abstract**

A device for ultrasonically treating a fluid and/or sample, the device (1) comprising a transducer (3) surrounding at least part of a cavity (5), the cavity (5) being configured to contain a fluid and/or sample (F), wherein the transducer (3) is electrically excitable to bring the device (1) in or near at least one ultrasonic resonance mode when the cavity contains the fluid and/or sample (F).

The invention also provides a system for treating a fluid and/or sample, for example a microfluidic system and/or a lab-on-a-chip system, the system comprising at least one such device.

## Description

The invention relates to a device for ultrasonically treating a fluid and/or sample.

Such a device is known from the prior art. For example, American patent US 6,664,104 B2 shows a device for lysing sample components, e.g. cells, spores or microorganisms. The device includes an ultrasonic horn, that is coupled to a cartridge for transferring ultrasonic energy to components captured on a filter of the cartridge.

The efficiency of known ultrasonic sample treatment devices is relatively low. Therefore, known devices have to make use of relatively long processing times. Also, the repeatability of sample treatment performed by known devices, is relatively low.

The present invention aims to provide an improved device for ultrasonically treating a fluid and/or sample. Particularly, it is an object of the invention to provide a device which can efficiently treat a sample and/or fluid with ultrasonic energy.

According to an embodiment of the invention, there is provided a device for ultrasonically treating a fluid and/or sample, the device comprising a a transducer surrounding at least part of a cavity, the cavity being configured to contain a fluid and/or sample, wherein the transducer is electrically excitable to bring the device in or near at least one ultrasonic resonance mode when the cavity contains the fluid and/or sample.

In this way, the device can efficiently treat a sample with ultrasonic energy. The device can achieve a relatively high repeatability, and relatively short processing times. Particularly, the device can be operated to effect ultrasonic amplitudes (or pressures) substantially anywhere throughout the device's cavity, or to effect relatively high pressures at and near a centre of the cavity, in a relatively simple manner, for example depending on the wavelength of the ultrasound during use.

The device according to the invention can be relatively compact. For example, the device can be provided as part of a lab-on-chip system, a microfluidic system or a similar miniaturised system. A compact design of the device can also be advantageous in case the device is to be provided in a large number, for example in an array of sample and/or fluid treatment devices, to treat a respective large number of samples and/or liquids at the same time.

In a further embodiment, the transducer can comprise piezoelectric material, which is electrically excitable to bring the device in the at least one ultrasonic resonance mode. For example, the transducer can be partly provided with piezoelectric material. Preferably, at least a transducer part that surrounds the cavity is substantially made of piezo-electric material, so that high pressures can be achieved in that cavity during use.

Advantageously, the transducer is configured to be excited such, that the transducer vibrates substantially in radial directions with respect to a centre of the device cavity when the cavity contains a fluid and/or sample, the transducer vibrations particularly comprising transducer contractions towards the centre of the cavity and transducer expansions away from that centre.

Thus, a very efficient sample and/or fluid treatment can be performed. Particularly, relatively high sample treatment pressures can be achieved in the cavity, more particularly at and near the centre. For example the cavity's centre can be a virtual central point, in case the cavity is substantially spherical, or a central line, for example in case the cavity is cylindrical.

For example, the transducer can be excited at such a frequency that the overall device resonates in one of its lower resonance modes. For such a mode, the transducer can perform essentially radial expansions and contractions. Thus, the device, in combination with sample/fluid content of its cavity, can form a compound resonator, wherein an outside of the transducer can be at a vibration velocity maximum during use, and wherein highest pressures (a displacement node) can occur in the centre of the cavity.

A device according to the invention can be used in various ways. Advantageously, during use, the transducer of the device is being electrically excited to achieve resonance of the device, at least when the cavity of the device is being filled with a fluid and/or substance. As follows from the above, preferably, the device vibrates substantially radially with respect to the cavity. Besides, the device can be used to efficiently effect cell lyses. The device can be operated in a batch process, for example when the cavity is being filled and emptied with a sample and/or fluid, to be treated, in a batch-like manner. For example, the cavity can be directly filled with fluid/sample. Also, in a batch process, a separate sample holder, for example an Eppendorf tube or a different container, can be installed or positioned, for example into the device's cavity, to treat a content of the sample holder.

Alternatively, one or more fluids and/or samples can be led through the cavity of the device in an in-line process, which can provide respectively high throughputs and a cost-effective way of treating samples and/or fluids.

In an embodiment, there is provided a system for treating a fluid and/or sample, for example a microfluidic system or a lab-on-a-chip system, the system comprising at least one device according to the invention to treat the fluid and/or sample.

This system can provide the above-mentioned advantages. In a further embodiment, the system can be configured to supply the fluid and/or sample to the cavity of the device, to be treated by the device, and configured to remove the fluid and/or sample from the device during and/or after the treatment of the sample. Advantageously, the system can comprise a fluid and/or sample supply conduit extending through the device cavity. Such a conduit can be configured in various ways. For example, to avoid sample contamination, it is advantageous when the fluid and/or sample supply conduit is removable from the device, for example the be cleaned, and/or disposable. In a further embodiment, the device's cavity can be filled with a coupling fluid, and the mentioned fluid/sample conduit can extend through the coupling fluid, such that the coupling fluid can transfer ultrasound to a content of the conduit.

Embodiments of the invention will now be described, by way of example only, with reference to the accompanying schematic drawings in which corresponding reference symbols indicate corresponding parts, and in which:
Fig. 1 depicts a cross-section of a first embodiment of a device according to the invention, in combination with a control unit;
Fig. 2 depicts a top view of the embodiment shown in Fig. 1;
Fig. 3 depicts a perspective view of the device shown in Fig. 1, in combination with a sample conduit traversing the device; and
Fig. 4 depicts a cross-section similar to Fig. 1 of an other embodiment of the invention.

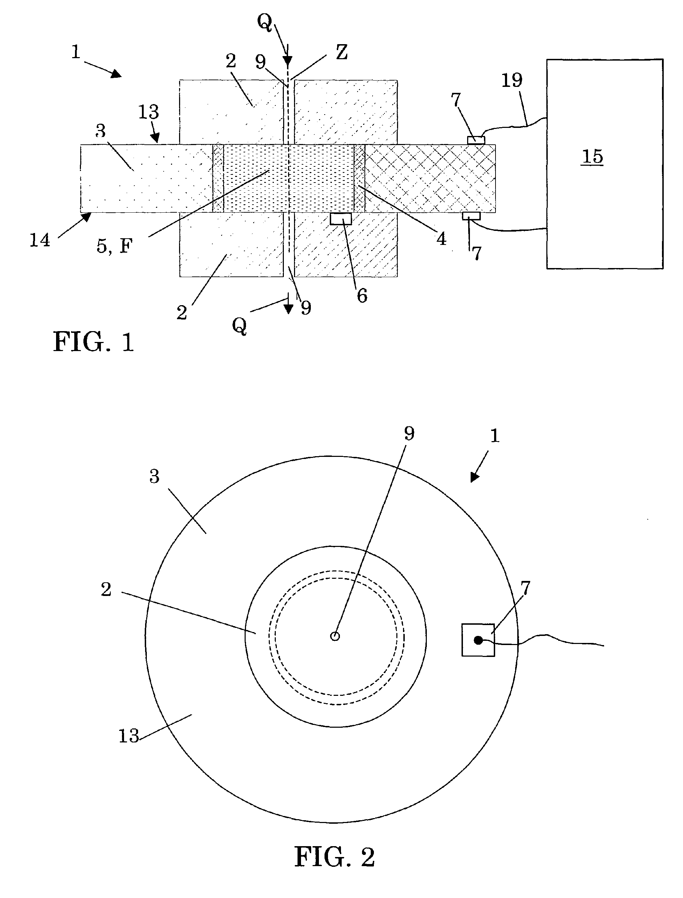

Figure 1 schematically shows a first embodiment of a device 1 for ultrasonically treating a fluid and/or sample F. As an example only, the fluid and/or sample can comprise biological material, cells, suspensions, spores, microorganisms, enzymes, DNA and/or other samples and/or fluids. Particularly, a sample to be treated can be a liquid sample, a microbiological fluid, and/or a sample contained in or carried by a liquid. A treatment to be performed can involve a sample lysing process, a mixing process, and/or a different treatment. In Fig. 1, the device 1 is shown as part of a system for treating a fluid and/or sample, for example a microfluidic system or a lab-on-a-chip system. The present system is also provided with a control unit 15, for controlling and/or adjusting the device 1.

Particularly, the device 1 shown in Figures 1-3 is a compound resonator 1. The present device 1 is provided with a transducer 3. The transducer 3 of the present embodiment is a hollow, substantially rotationally symmetrical transducer element 3 provided with piezoelectric material. Particularly, the transducer 3 is substantially cylindrical or ring-shaped, having a substantially ring-shaped cross-section (see Fig. 2). A centre line of the transducer 3 is depicted in the drawing by a dashed line Z. Also, for example, the transducer 3 can be substantially elliptical or spherical, or be shaped differently.

In the present embodiment, the transducer substantially surrounds a cavity 5, viewed in radial directions, but does not substantially extend opposite axial sides of the cavity 5. The cavity 5 is configured to contain a fluid and/or sample F. In the present embodiment, the cavity 5 is also substantially cylindrical, and concentric with the mentioned centre line Z. Thus, this centre line Z is also the centre line of the cavity.

The transducer 3 and cavity 5 can be configured in various ways. For example, in the present embodiment, the transducer 3 can be substantially homogeneous, and/or be substantially made of piezoelectric material. The transducer 3 can be a substantially solid element 3. Besides, the transducer 3 can comprise one or more parts which are not piezoelectric. For instance, in a further embodiment, the transducer 3 can consist of alternating sections of active material (i.e. piezoelectric material) and passive material (i.e. titanium or a different material) To be effective, however, it is preferred that a significant part of a circumference or part of the transducer 3, surrounding the cavity 5, is made of active, piezoelectric, material, as in the present embodiment in case the transducer 3 is a rotationally symmetrical element which is substantially made of piezoelectric material.

For example, the cavity 5 can be a substantially rotationally symmetrical cavity or chamber, for example a substantially spherical, cylindrical or elliptical cavity, or a cavity having a different, preferably relatively simple, shape. In such a cavity 5, during use, the largest acoustical pressures can occur in the centre the cavity, which can provide a highly efficient device, which can locally generate large acoustical pressures with little electrical power input.

Besides, the device can comprise electrically insulating material 4 extending between the transducer 3 and the cavity 5, to substantially electrically separate the cavity 5 from the transducer 3. In the present embodiment, the insulating material 4 extends concentric with respect to the centre line Z, between an inner contour of the transducer 3 and the device's cavity 5. Also, the insulating layer 4 can electrically insulate fluid in the cavity from the electrodes 7 mentioned below. The insulating layer can comprise various electrically insulating substances, for example one or more oxides, insulating plastics and/or other suitable insulating material.

Further, the present embodiment comprises substantially rotationally symmetrical solid coverings 2 to cover or close the device cavity 5, particularly at axial sides of the cavity 5 which are not faced towards the transducer 3, and which particularly do not abut the insulating layer 4. Each such covering 2 can be configured in various ways. In the present embodiment, the coverings 2 are dimensioned to perform essentially radial vibrations (towards and away from the centre line Z) during use. For example, in the present embodiment, the coverings 2 are two substantially cylindrical solid discs 2, which extend over the axially opposite sides of the sample/fluid cavity 5, the coverings 2 having substantially flat circular inner sides which face one another. The coverings 2 can also be shaped differently, for example as sections of ellipses or spheres, or have other suitable shapes. For example, the shape of the covering 2 can depend of a mentioned shape of the transducer 3 and/or a mentioned shape of the cavity 5.

As follows from the above, in the present embodiment, the cavity 5 is preferably entirely surrounded by substantially solid material(s) 2, 3, 4 to allow pressure build-up in the cavity 5 during use. Particularly, in the present embodiment, these solid materials are provided by the transducer element 3 and the coverings 2, and by mentioned insulating material 4. In the present embodiment, the cavity 5 can be substantially closed from an environment by an inner side of the insulating material 4, extending between the transducer 3 and the cavity, and by the inner sides of the coverings 2.

To feed fluid to the cavity 5 and/or extract fluid from the cavity 5, one or both coverings may be detachably connected to other parts of the device, such as to the transducer 3 and/or insulator layer 4. Advantageously, the device 1 can comprise one or more openings and/or fluid conduits, or ports, 9 to supply fluid(s) and/or sample(s) to the device's cavity 5, and/or to extract fluid(s) and/or sample(s) from the cavity 5. Such openings and/or conduits can be configured in various ways.

For example, in the present embodiment of Fig. 1-2, the coverings 2 of the cavity can include such fluid conduits or fluid passages 9, for example one conduit to supply a sample and/or fluid to the cavity, particularly to fill the cavity 5, and the other conduit to remove the sample and/or fluid, for example during and/or after treatment. As an example, the fluid passages 9 of the coverings 2 can be connectable to suitable fluid supply and fluid discharge means, sample pumping means and the-like.

Also, one or more passages to supply fluid and/or samples to the cavity, and/or to remove fluid and/or samples, can extend in various other directions through the device 1, as will be clear to the skilled person, for example in substantially radial directions through the transducer 3.

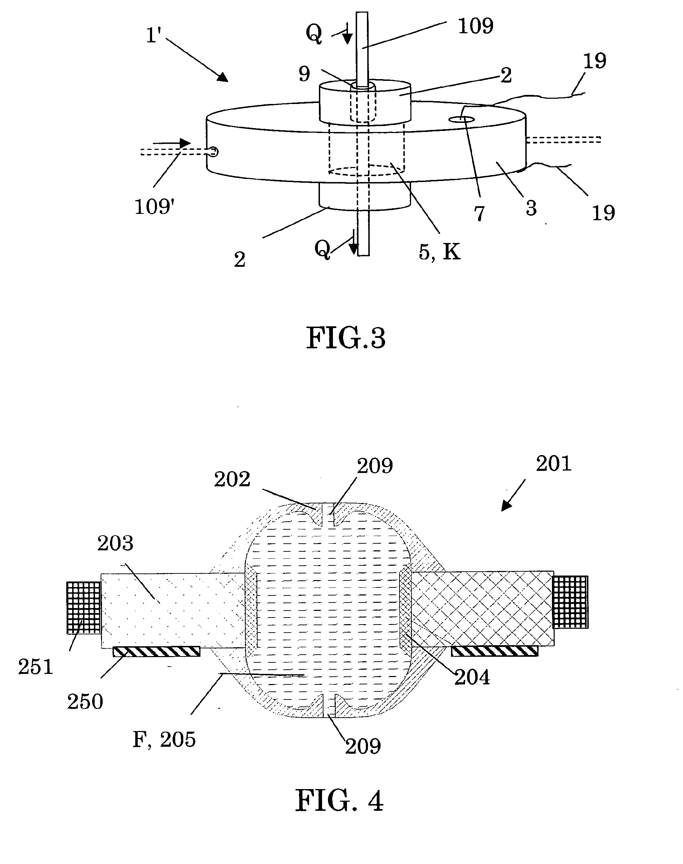

Figure 3 depicts a further embodiment of the invention. In fig. 3, the system comprises a separate fluid conduit 109, for example a tube, which traverses the device 1', via the openings 9 of the coverings 2 and the cavity 3. For example, the fluid conduit 109 can be removable from the device 1', and/or be disposable with respect to a remaining part of the device 1'. Also, the device 1 as such can be configured to be disposable after use.

The separate fluid conduit 109 may traverse the resonator cavity 3 one or more times. Preferably, in that case, the cavity 3 already contains a coupling fluid K, which does not leave the device 1' during use, wherein the fluid conduit 109 extends through such a coupling fluid K to supply and remove the fluid/sample to be treated. In that case, during use, ultrasound within the resonator can be transferred to a content of such a conduit 109 via the coupling fluid. For example, a mentioned coupling fluid K can be water, or a different fluid. The application of such a separate fluid conduit 109 can keep a sample and/or fluid, to be treated, separated from a content of the device's cavity 5, such as a mentioned coupling fluid K. In this way, contamination of the interior of the device's cavity and of the coupling fluid can be prevented, so that the device 1' as such can be re-used again and again, as a non-disposable part of the system. Also, such a 'tube within the resonator' concept can allow a very simple yet reliable coupling of the device 1 and other system components, for example other microfluidic units (not depicted).

The separate tube 109 can be configured in various ways. For example, such a tube can be substantially flexible. The tube 109 can include one or more separate fluid passages, for example one or more parallel capillaries. The separate tube 109 can have a circular, hexagonal or different cross-section. Also, the tube can be made of a suitable material, for example glass, one or more plastics and/or other materials.

Alternatively, as is shown by dashed lines 109' in Fig. 3, one ore more fluid lines, for example a separate removable conduit, can extend radially through the device 1', to and/or from the central cavity 5, for example through the resonator 3.

The fluid conduits or openings of the device 1, 1' can be used as separate supply and extraction channels. This allows simple flow-through (in-line) processing. However, feeding of fluid to and removing fluid from the device's cavity 5 may also be achieved using a single channel, or with dual channels extending from the same side of the device 1, for instance, a single channel with a concentric central capillary or two offset channels, and/or different types of fluid passages.

The present piezoelectric transducer 3 is electrically excitable to bring the device 1, 1' in or near at least one ultrasonic resonance mode when the cavity contains the fluid and/or sample F. In the present embodiment, the transducer 3 is simply configured to be excited such, that the transducer 3 vibrates substantially in radial directions with respect to the centre Z of the device cavity 5 when the cavity contains a fluid and/or sample F. Particularly, such transducer vibrations comprise transducer contractions towards the centre Z of the cavity 5 and transducer expansions away from that centre line Z.

Preferably, during use, the transducer 3, the coverings 2, and the insulating layer 4 are firmly mechanically fixed to each other. For example, the transducer 3, the coverings 2, and the insulating layer 4 can be integrally connected to each other during use. Such integral connection can be provided in different ways, and can include a non-detachable connection, an adhesive-based attachment and/or a different coupling, as will be clear to the skilled person. Particularly, the various parts 2, 3, 4 of the device 1 can be connected such, during use, that the device 1, 1' can form a compound ultrasonic resonator during use. During use, a content of the device's cavity 5 is preferably also part of such a compound resonator 1, 1'. In that case, in the present embodiment, the compound resonator can be substantially formed by: the transducer 3, the coverings 2, the cavity 5 and its content the insulating layer 4 and conduits or openings 9. Following from the above, particularly, the content of the resonator cavity 5 can be a mentioned sample and/or fluid F to be treated (see Fig. 1-2), or a mentioned coupling fluid K in combination with a fluid conduit 109 (and its content) extending there through (see Fig. 3).

In the present embodiments, the control unit 15 can be configured to control and/or adjust the electrical excitation of the transducer 3 to bring and keep the device 1, 1' in or closely near a desired resonance mode. To this aim, the present control unit 15 serves as a power source, and can power the transducer, via suitable electrodes 7. As is shown in Fig. 1, the transducer 3 preferably comprises at least such two electrodes 7 to couple the control unit or electrical power source 15 to the transducer for exciting the transducer. For example, the control unit 15 can be coupled to the electrodes 7 via suitable wiring 19.

In the present embodiments, the electrodes 7 are provided on end faces of the transducer 3, and particularly at a first ring-shaped side 13 and second ring-shaped side 14 of the transducer 3, the ring-shaped sides 13, 14 being substantially faced away from each other and extending between the inner contour and an outer contour of the transducer 3. The electrodes 7 can also be located elsewhere, for example at the inner and outer contour of the transducer 3.

The control unit 15 as such can be configured in various ways. Besides providing a power source, to provide an alternating transducer driving voltage, for example, the control unit 15 can be provided with a computer, micro-electronics, a processing unit, a memory, a user interface, software and/or suitable computer readable instructions and/or other suitable control means. Also, the system can be provided with a separate power source, which can be controllable by a suitable control unit.

During use, a suitable alternating driving voltage, of a suitable frequency, is being applied to the transducer 3 by the control unit 15, preferably such that transducer 3 vibrates radially and the device 1, 1' resonates in one of its lower modes. In the present embodiments, the frequency to bring the device 1, 1' to a desired radial resonance mode will depend on the content of the cavity 5, particularly since the device 1, 1' forms a compound resonator. Then, the outside or outer contour of the piezo element 3, or transducer 3, can be at a vibration velocity maximum, and the highest pressures (a displacement node) can occur in the centre of the reactor cavity 5. Other factors, such as the composition of surroundings of the device, can also influence the frequency, as will be clear to the skilled person.

The control unit 15 can be configured in various ways to determine, which frequency is to be applied to provide the mentioned resonance of the device 1, 1'. For example, the control unit 15 can be configured to calculate and/or estimate such a frequency, based on data relating to the construction of the device 1, 1' and the composition of a sample and/or fluid with is to be treated in the cavity 5. Also, the control unit 15 may operate based on data already stored in the control unit, for example calibration data.

In an advantageous embodiment, the control unit can be configured to control and/or adjust the device 1, 1' based on real-time measurements.

Advantageously, the control parameters may be derived from measurement of electrical input parameters (voltage and current) of transducer 3 and quantities calculated from these (complex electrical impedance and power), simply determined by a detecting part of the control 15, or by a suitable electrical measuring device (not shown), or other electrical sensors. For example, the control unit 15 can be configured to control the device 1, based on an electrical impedance curve for the transducer 3.

Alternatively, for example, the resonator device 1, 1' can be provided with one or more sensors 6 (see Fig. 1) for monitoring pressure and/or temperature in the device cavity 5. For example, the sensor 6 can comprise a hydrophone, configured to sense dynamic pressure in the cavity. The one or more sensors 6 can be connected or connectable to the control unit 15, for example wirelessly or by wiring (not depicted), to provide the control unit 15 with monitoring results. The control unit 15 can then be configured to control and/or adjust the electrical excitation of the transducer 3 based on the monitoring results, to bring and keep the device 1 in a desired resonance mode. As an example, the control unit of the transducer can involve a feedback or feed-forward control process.

As is mentioned above, the device 1, ' can be part of a system, the system being configured to supply fluid and/or sample F to the cavity 5 of the device 1, to be treated by the device, and configured to remove the fluid and/or sample from the device during and/or after the treatment of the sample. The system can include one or more pumps (not shown), to pump fluid to and/or from the device 1. Also, the system can include one or more reservoirs (not shown) to hold fluid, before being fed to the device 1, and one or more reservoirs (not shown) to receive fluid after being treated by the device 1. As an example only, such one or more pumps and/or reservoirs can be part of a microfluidic system or microfluidic chip, as will be clear to the skilled person.

In a further embodiment, the mentioned fluid openings or conduits 9 of the coverings 2 of the device 1, 1' can be dimensioned such, that their acoustical impedances substantially prevent or reduce acoustic leakage from the resonator cavity 5 via these openings or conduits 9. To this aim, in a further embodiment, the openings and/or fluid conduits 9 of the device are configured to form a Helmholtz resonator with a content F, K of the device cavity 5 during use. The opening and/or fluid conduit 9 can then advantageously be dimensioned such, that a cut-off frequency of the input and output openings/conduits 9 into the cavity 5 (the first resonance frequency of the Helmholtz resonator formed by these openings/conduits and the cavity volume) is substantially below the frequency of the ultrasonic resonance mode in which the present compound resonator 1 vibrates during use. Thus, the entrances of openings/conduits 9 to the cavity 5 present a high impedance to acoustic pressure waves generated during processing, preventing significant loss of ultrasonic power into these channels 9 and allowing adequate acoustic pressure to be maintained in the cavity 5 during processing without the need to close off these channels or ports 9.

The devices shown in figures 1-3 can made be relatively compact. The device 1, 1' can be miniaturised to desired, arbitrarily, small dimensions. For example, the device can be constructed such that the volume of the cavity can be 1 cm³ or smaller or even much smaller, for example 0.1 cm³ or smaller, or 0.01 cm³ or smaller. The device can be miniaturised to desired small dimensions, for example in case the device is provided as part of a lab-on-chip system and/or a microfluidic system. The dimensions of the compound resonator 1 can, for example, depend on a specific size and on available materials, and on a type of sample and/or liquid to be treated. For example, obtaining a useful lysing efficiency for a specific type of cell may dictate a certain maximum (resonant) frequency.

During use of the embodiment of Fig. 1, a sample and/or liquid F to be treated, is being fed to the device's cavity 5, via a fluid conduit 9, particularly to substantially fill the cavity 5. Similarly, during use of the Fig. 3 embodiment, a sample and/or liquid to be treated is being fed to the device's cavity 5, via the separate fluid conduit 109 traversing the cavity 5, wherein a remainder of the cavity 5 can already be filled with a mentioned coupling fluid K. The control unit 15 electrically excites the transducer 3 of the device 1, 1' by providing a suitable driving voltage to the transducer 3, such that the device 1, 1' is brought into a radial resonance mode to ultrasonically treat the sample and/or fluid. For such a mode, the piezo-transducer 3 performs essentially radial expansions and contractions, and the device 1, 1' vibrates substantially radially with respect to the cavity 5 (to and from the centre line Z). As an example only, for conventionally dimensioned applications, a lowest resonant frequency will be in the frequency range of about 20 - 100 kHz up to several hundred MHz, depending on the resonator size. Higher modes may be used with higher frequencies. As the dimensions of the device 1 are miniaturized, the frequency to provide the desired radial resonance can be higher than 100 kHz.

The feeding of the sample and/or liquid can be a batch-type feeding. As an example, the sample and/or liquid can be fed into the cavity 5 directly, or be held or contained in a suitable sample holder (for example an Eppendorf tube), to be brought into the cavity 5. In the latter case, for example, the device 1, 1' can be provided with a suitable opening to receive the sample holder, to allow the loading and unloading of a sample held by the holder. Besides, the sample holder can be configured to (acoustically) close a sample loading/unloading opening of the device, or cooperate with the device 1, 1' to provide such a closing, when the sample holder is been loaded to hold the sample in the device 1, 1'.

On the other hand, one or more fluids and/or samples can be being led through the cavity of the device 1, 1' in an in-line process, as is depicted by arrows Q in Fig. 1 and 3.

In operation, the resonator 1, 1' can be excited by the electrical power source 15 in the desired frequency range. Herein, the frequency and amplitude of the respective driving voltage can be controlled for optimum operation, for example on the basis of measurements of electrical power and/or impedance, on information from additional sensing elements 6 such as the hydrophones mentioned above, and/or in a different manner.

During use of the present device 1,1', the total ultrasonic power can be measured and controlled accurately, for example via the real-time measurement of the complex electrical impedance of the transducer 3. The respective elementary form of the ultrasonic field inside the cavity 5 allows precise dosage of the ultrasound to obtain a desired treatment in the cavity, such as to obtain a certain lysing effect or mixing effect, in minimum time.

Figure 4 depicts an alternative embodiment of the invention, which differs from the embodiments of Fig. 1-3, in that each covering or endcap 202 is shaped in such a way that the covering 202 can perform bending vibrations during use. In the embodiment of Fig. 4, each covering has a substantially conical or frusco-conical contour. In this alternative construction a wall thickness of the (preferably essentially thin-walled) covering is tapered to perform mechanical impedance matching. In the present embodiment, these endcaps 202 are flexural, and function as displacement amplifiers and / or mechanical impedance transformers, matching the ultrasonic output of the resonator to the requirements. Particularly, for a given resonant frequency, the device dimensions may be minimized or optimized. As with the first design of Figure 1, in- and outlets 209 of the device 202 can form a Helmholtz resonator with the reactor cavity 205 and may be positioned at locations other than shown here.

Besides, in a further embodiment, the device 1, 1', 201 can comprise one or more other, integral solid substantially rotationally symmetrical elements, for example circular solid rings 250, 251 of suitable material. For example, such rings 250, 251 can be substantially concentric with respect to the transducer 3. Such rings 250, 251 can be provided to further optimise the resonator device 1, for example to alter or optimise the resonance. Such rings 250, 251 are schematically depicted in the Fig. 4 embodiment, but can also be provided, for example, in the embodiments of Figures 1-3 and in other embodiments of the invention. Also, the device 1 can be provided with other elements to alter or optimise the resonance.

The embodiments 1, 1', 201, shown in the drawings, can efficiently treat the content of the device's cavity 5. High ultrasonic amplitudes can be achieved throughout the cavity 5, 205. The resonator device 1, 1', 201 can be miniaturised, maybe provided as a disposable (lysing) module, to be used once, or may be reusable.

Particularly, the device 1, 1', 201 can be operated to effect ultrasonic amplitudes (or pressures) substantially anywhere throughout the device's cavity, or to effect relatively high pressures at and near a centre of the cavity, in a relatively simple manner, for example depending on the wavelength of the ultrasound during use. For example, if the cavity 5 is relatively small with respect to the mentioned wavelength, a pressure in the cavity can be substantially the same throughout. As the relative dimensions of the cavity increase, up to ¼ wavelength and larger, the centre of the cavity can increasingly show higher than average pressures. Thus, following the present invention, the dimensions of the cavity 5 may simply be tailored to achieve an optimum balance between very high local pressure in the cavity's centre (perhaps desired to "crack" especially tough cells in a lysing process), and somewhat lower pressures average in the chamber or cavity, allowing a high number of cells to be processed simultaneously, albeit at slightly lower pressures. For example, cavity dimensions can be tailored depending on the nature of a sample to be treated.

Various components of the device 1, 1', 201 can be constructed of various materials. As an example only, a suitable fluid conduit can be made of perspex, glass, plastic and/or any other suitable material. A mentioned covering 2 can be made of an oxide, A1203, plastic, glass, and/or different materials. The electrodes 7 can include suitable metals, for example silver, and/or other suitable electrode materials. The device 1, 1', 201 can be integrated on a chip, or chip-like unit, and/or be provided in a different way.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

## Claims

1. A device for ultrasonically treating a fluid and/or sample, the device (1; 201) comprising a transducer (3) surrounding at least part of a cavity (5), the cavity (5) being configured to contain a fluid and/or sample (F), wherein the transducer (3) is electrically excitable to bring the device (1; 201) in at least one ultrasonic resonance mode when the cavity contains the fluid and/or sample (F).

2. Device according to claim 1, wherein the transducer (3) is configured to be excited such, that the transducer (3) vibrates substantially in radial directions with respect to a centre (Z) of the device cavity (5) when the cavity contains a fluid and/or sample (F), the transducer vibrations particularly comprising transducer contractions towards the centre (Z) of the cavity (5) and transducer expansions away from that centre (Z).

3. Device according to claim 1 or 2, wherein the transducer (3) is substantially cylindrical, elliptical or spherical, having a substantially ring shaped cross-section.

4. Device according to any of the preceding claims, wherein the transducer (3) comprises at least two electrodes (7) to couple an electrical power source to the transducer for exciting the transducer.

5. Device according to any of the preceding claims, wherein the transducer (3) is a hollow, substantially rotationally symmetrical piezoelectric element.

6. Device according to any of the preceding claims, comprising at least one opening and/or fluid conduit (9; 109) to a supply a fluid and/or sample to the device cavity (5), and/or to extract a fluid and/or sample from the cavity (5).

7. Device according to claim 6, wherein the opening and/or fluid conduit (9) is configured such that the opening and/or fluid conduit (9) present a high impedance to acoustic pressure waves generated during use, to substantially prevent or reduce acoustic leakage from the resonator cavity (5).

8. Device according to any of the preceding claims, wherein the cavity (5) is substantially rotationally symmetrical.

9. Device according to any of the preceding claims, comprising at least one covering (2) to cover the device cavity (5), wherein the covering (2) preferably is substantially rotationally symmetrical.

10. Device according to claim 9, wherein the covering (2) is substantially cylindrical, or has a substantially conical or frusco-conical contour.

11. Device according to any of claims 9-10 in combination with claim 6 or 7, wherein the opening and/or fluid supply extends through the covering (2).

12. Device according to any of the preceding claims, comprising electrically insulating material extending between the transducer (3) and the cavity (5), to substantially electrically separate the cavity (5) from the transducer (3).

13. Device according to any of the preceding claims, comprising one or more integral substantially rotationally symmetrical elements (250, 251), for example integral solid rings, which are preferably substantially concentric with respect to the transducer (3), wherein the one or more integral elements (250, 251) are provided to alter or optimise the resonance of the device (1; 201).

14. Device according to any of the preceding claims, comprising one or more sensors (6) for monitoring pressure and/or temperature in the device cavity.

15. Device according to claim 14, wherein the one or more sensors are connected or connectable to a control unit (15) to provide the control unit (15) with monitoring results, wherein the control unit (15) is preferably configured to control and/or adjust the electrical excitation of the transducer based on the monitoring results, to bring and keep the device (1; 201) in or near a desired resonance mode.

16. Device according to any of claims 1-15, wherein the transducer (3) comprises piezoelectric material, which is electrically excitable to bring the device (1; 201) in the at least one ultrasonic resonance mode.

17. System for treating a fluid and/or sample, for example a microfluidic system and/or a lab-on-a-chip system, the system comprising a device (1; 201) according to any of the preceding claims to treat the fluid and/or sample (F).

18. System according to claim 17, configured to supply the fluid and/or sample (F) to the cavity (5) of the device (1; 201), to be treated by the device, and configured to remove the fluid and/or sample from the device during and/or after the treatment of the sample.

19. System according to claim 17 or 18, comprising a separate fluid and/or sample supply (109) conduit extending through the device cavity (3), wherein a remainder of the cavity is preferably filled with a coupling fluid (K) to transfer ultrasound to a content of the fluid and/or sample supply conduit (109).

20. System according to claim 19, wherein the fluid and/or sample supply conduit (109) is removable from the device and/or disposable.

21. System according to any of the claims 17-19, comprising a control unit (15) which is coupled to the transducer (3) of the device (1; 201) during use, and which is configured to control and/or adjust the electrical excitation of the transducer (3) to bring and keep the device (1; 201) in or near a desired resonance mode.

22. Use of a device according to any of claims 1-16, wherein the transducer (3) of the device (1; 201) is being electrically excited to achieve resonance of the device (1; 201), at least when the cavity of the device is being filled with a fluid and/or substance (F).

23. Use according to claim 22, wherein the device vibrates substantially radially with respect to the cavity (5).

24. Use according to claim 22 or 23 to effect cell lyses.

25. Use according to any of claims 22-24, wherein one or more fluids and/or samples are being led through the cavity of the device (1; 201) in an in-line process.

26. Use according to any of claims 22-24, wherein a sample to be treated is being held by a separate sample holder, which sample holder is being installed or positioned to bring the sample into the device's cavity.
